# EUROPÄISCHE PATENTANMELDUNG

(11) **EP 2 416 208 A2**
(43) Veröffentlichungstag der Anmeldung: **08.02.2012**
(21) Anmeldenummer: 11176311.6
(22) Anmeldetag: 02.08.2011
(51) Int. Cl.: G02F 1/133, G02F 1/1347, G06K 9/00, G06F 3/042, G09G 3/36

(54) **Bildschirm sowie Verfahren zum Darstellen von optischen Inhalten auf einem Bildschirm**

(30) Priorität: 06.08.2010 DE 102010033649
(71) Anmelder: Barthels, Daniel, 40489 Düsseldorf (DE)
(72) Erfinder: Barthels, Daniel, 40489 Düsseldorf (DE)
(74) Vertreter: von Kreisler Selting Werner

(57) **Zusammenfassung**

Die Erfindung betrifft einen Bildschirm mit einer Hintergrundbeleuchtung (12) und einer Scheibe (14), durch die eine Darstellungsfläche zu einem Betrachter hin gebildet wird. Der Bildschirm (10) umfasst eine Flüssigkristallschicht (16), die pixelweise ansteuerbar ist und die in Abhängigkeit einer anliegenden Spannung für jedes Pixel einen Teil oder das gesamte Licht der Hintergrundbeleuchtung (12) in Richtung eines Betrachters durchlässt.

Der Bildschirm (10) umfasst eine Bildaufnahmevorrichtung (18) zur Aufnahme einer bildlichen Darstellung eines Gegenstandes (24), der durch die Scheibe (14) der Darstellungsfläche sichtbar ist. Die Bildaufnahmevorrichtung (18) ist aus der Sicht des Betrachters hinter der Flüssigkristallschicht (16) angeordnet.

Der Bildschirm umfasst ferner eine umschaltbare Diffusorschicht (20), die zwischen der Flüssigkristallschicht (16) und der Bildaufnahmevorrichtung (18) angeordnet ist, wobei die umschaltbare Diffusorschicht (20) in Abhängigkeit einer anliegenden Spannung zwischen einem transparenten und einem transluzenten Zustand umschaltbar ist.

Die Erfindung umfasst ferner ein Verfahren, das in Kombination mit dem beschriebenen Bildschirm angewandt werden kann.

## Beschreibung

Die Erfindung betrifft einen Bildschirm sowie ein Verfahren zum Darstellen von optischen Inhalten auf einem Bildschirm.

Aus dem Stand der Technik sind beispielsweise LCD-Bildschirme bekannt. LCD-Bildschirme können als Touchdisplay ausgestaltet sein, wobei hier beispielsweise kapazitive oder resistive Touchdisplays Verwendung finden.

Nachteilig an derartigen LCD-Touchdisplays ist, dass sie nur Touchbefehle erkennen können, wobei gegebenenfalls eine Multitouchfunktionalität gegeben sein kann. Es ist jedoch nicht möglich, mit derartigen Displays eine bildliche Darstellung eines Gegenstandes zu erfassen, der sich beispielsweise auf der Oberfläche des Displays befindet.

Aus EP 1 615 109 A2 ist eine Vorrichtung und ein Verfahren zum Erkennen von Gesten und zum Steuern einer Software durch diese Gesten beschrieben. Hierzu wird ein Projektor verwendet, der sein Bild über zwei Spiegel in Richtung einer Darstellungsfläche zu einem Betrachter hin projiziert. Innerhalb der Vorrichtung ist eine Vielzahl von Infrarotleuchtmitteln angeordnet, die Licht in Richtung der Darstellungsfläche des Bildschirms ausstrahlen. Dieses Licht wird von Gegenständen, die sich auf der Darstellungsfläche oder in geringem Abstand darüber befinden, wieder durch die Darstellungsfläche hindurch in die Vorrichtung hinein reflektiert.

Diese reflektierten Infrarotstrahlen werden im Inneren der Vorrichtung durch eine hierfür ausgelegte Infrarotkamera erfasst, sodass es möglich wird, Gegenstände, die sich auf der Darstellungsfläche oder im geringen Abstand hierüber befinden, zu erkennen.

Nachteilig an der beschriebenen Vorrichtung ist der komplexe Aufbau, der vor allem in einer sehr großen Bauhöhe resultiert. Es ist somit nicht möglich, einen flach bauenden Bildschirm bereitzustellen.

Aufgabe der Erfindung ist es, einen Bildschirm und ein Verfahren zum Darstellen von optischen Inhalten auf einem Bildschirm bereitzustellen, wobei die Möglichkeit geschaffen werden soll, eine bildliche Darstellung eines Gegenstandes, der sich an der Darstellungsfläche des Bildschirms oder in einem bestimmten Abstand hierzu befindet, zu erfassen und wobei der Bildschirm einen vereinfachten Aufbau und eine flache Bauform aufweist.

Die Lösung der Aufgabe erfolgt erfindungsgemäß durch die Merkmale der Ansprüche 1 und 6.

Der erfindungsgemäße Bildschirm weist eine Hintergrundbeleuchtung sowie eine Scheibe auf, durch die eine Darstellungsfläche zu einem Betrachter hin gebildet wird. Hierbei kann es sich beispielsweise um eine Glasscheibe handeln. Der Bildschirm ist als LCD-Bildschirm ausgebildet und weist eine Flüssigkristallschicht auf, die über eine Steuerung pixelweise ansteuerbar ist und die in Abhängigkeit einer anliegenden Spannung für jedes Pixel einen Teil oder das gesamte Licht der Hintergrundbeleuchtung in Richtung eines Betrachters durchlässt. Bei einem Schwarzweißbildschirm entspricht die Auflösung der Flüssigkristallschicht, das heißt die Anzahl der Punkte, die in dieser Schicht einzeln angesteuert werden, der Auflösung des Bildschirms, das heißt der Anzahl seiner Bildpunkte oder Pixel.

Jeder Bildpunkt, beziehungsweise jedes Pixel ist somit einem Punkt in der Flüssigkristallschicht zugeordnet, der in Abhängigkeit der anliegenden Spannung einen Teil oder das gesamte Licht der Hintergrundbeleuchtung in Richtung des Betrachters durchlässt. Bei einem Farbdisplay, beispielsweise in RGB-Technologie, ist die Anzahl der Ansteuerungspunkte der Flüssigkristallschicht mindestens dreimal so groß wie die Anzahl der Bildpunkte oder Pixel des Bildschirms, sodass jedes Pixel des Bildschirms mindestens drei Ansteuerungspunkte der Flüssigkristallschicht aufweist, von denen z.B. jeweils einer für die Farben rot, grün und blau zuständig ist. Auch ist es möglich, dass jedes Pixel des Bildschirms vier oder mehr Ansteuerungspunkte der Flüssigkristallschicht aufweist, die alternativ oder zusätzlich zu den Farben rot, grün und blau weitere Farben ansteuern. Hierbei handelt es sich um eine Alternative zu der aus dem Stand der Technik bekannten RGB-Technologie.

Somit entsteht in Abhängigkeit der Lichtmenge, die in jedem Pixel von der Flüssigkristallschicht durchgelassen wird, ein aus einer Vielzahl von Pixeln bestehendes Bild, das für den Betrachter sichtbar ist. Diese Funktionsweise entspricht der Funktion eines üblichen LCD-Bildschirms, sodass an dieser Stelle auf die Darstellung weiterer, dem Fachmann bekannter Details verzichtet wird.

Erfindungsgemäß weißt der Bildschirm eine Bildaufnahmevorrichtung zur Aufnahme einer bildlichen Darstellung eines Gegenstandes auf, der durch die Scheibe der Darstellungsfläche des Bildschirms sichtbar ist. Die Bildaufnahmevorrichtung ist somit vorzugsweise innerhalb oder am Bildschirm angeordnet und kann aus dem Inneren des Bildschirms heraus durch die vordere Scheibe des Bildschirms, das heißt die Darstellungsfläche, Bilder von Gegenständen aufnehmen, die durch diese Scheibe sichtbar sind. Diese Gegenstände können sich entweder unmittelbar auf der Scheibe, das heißt in Kontakt hierzu oder aber in einem Abstand zu der Scheibe befinden. Die Bildaufnahmevorrichtung ist aus der Sicht des Betrachters hinter der Flüssigkristallschicht angeordnet. Dies bedeutet, dass die Aufnahme der Bildaufnahmevorrichtung durch die Flüssigkristallschicht hindurch erfolgt. Diese wird hierfür derart mit einer Spannung angesteuert, dass sie im Wesentlichen transparent wird und somit den Einfall von Lichtstrahlen von außerhalb des Bildschirms durch die Scheibe in Richtung der Bildaufnahmevorrichtung nicht behindert.

Erfindungsgemäß weist der Bildschirm ferner eine umschaltbare Diffusorschicht auf, die zwischen der Flüssigkristallschicht und der Bildaufnahmevorrichtung angeordnet ist. Diese umschaltbare Diffusorschicht ist in Abhängigkeit einer anliegenden Spannung zwischen einem transparenten und einem transluzenten Zustand umschaltbar. Derartige umschaltbare Schichten sind aus dem Stand der Technik bekannt. Beispielswese werden sie verwendet, um eine Glasfläche von Milchglas in Klarglas und umgekehrt umzuschalten. Ferner sind ähnliche umschaltbare Schichten zur steuerbaren Verdunklung von Glasdächern bei Kraftfahrzeugen bekannt.

Der erfindungsgemäße Bildschirm ist zunächst deswegen vorteilhaft, weil er eine flache Bauform aufweist. Eine derartige flache Bauform ist bei der in der Beschreibungseinleitung dargestellten Vorrichtung, die in EP 1 615 109 A2 beschrieben wird, nicht möglich, da hier innerhalb der Vorrichtung der Projektor sowie die zwei Spiegel zum Umlenken des projizierten Bildes in Richtung des Betrachters untergebracht werden müssen. Eine hochauflösende Bildaufnahme von Gegenständen auf dem Display durch die Infrarotkamera ist bei der genannten Vorrichtung ebenfalls nicht möglich.

Es ist ferner nicht möglich, einen aus dem Stand der Technik bekannten LCD-Bildschirm in seinem Innenraum mit einer Bildaufnahmevorrichtung auszustatten, ohne dass diese für einen Betrachter durch die Displayoberfläche sichtbar wäre.

Zur Vergleichmäßigung der Hintergrundbeleuchtung werden bei LCD-Bildschirmen üblicherweise transluzente Schichten oder Diffusorschichten verwendet, die vor der Hintergrundbeleuchtung angeordnet sind und das Licht der Hintergrundbeleuchtung streuen und vergleichmäßigen. Eine Bildaufnahmevorrichtung müsste somit entweder vor einer solchen Diffusorschicht angeordnet sein oder innerhalb einer Ausnehmung in dieser Diffusorschicht angebracht sein. In beiden Fällen wäre die Bildaufnahmevorrichtung für einen Betrachter sichtbar. Erst durch die erfindungsgemäße Verwendung einer umschaltbaren Diffusorschicht, die zwischen der Flüssigkristallschicht und der Bildaufnahmevorrichtung angeordnet ist und die zwischen einem transparenten und einem transluzenten Zustand umschaltbar ist, wird das Anbringen einer Bildaufnahmevorrichtung im oder am Bildschirm möglich.

Hintergrund der Erfindung ist, dass die Darstellung der Bildschirminhalte in einer sogenannten Darstellungsphase stattfindet, während die umschaltbare Diffusorschicht derart mit einer elektrischen Spannung angesteuert wird, dass die umschaltbare Diffusorschicht transluzent ist und somit die Bildaufnahmevorrichtung, die sich in einem ausreichenden Abstand hinter dieser Schicht befindet, für den Betrachter nicht sichtbar ist. Die Bildaufnahme durch die Bildaufnahmevorrichtung wird dagegen während einer sogenannten Aufnahmephase getätigt, während die umschaltbare Diffusorschicht derart mit einer elektrischen Spannung angesteuert wird, dass die umschaltbare Diffusorschicht transparent ist und somit Lichtstrahlen von außerhalb des Bildschirms durch die Darstellungsfläche oder Scheibe des Bildschirms in Richtung der Aufnahmevorrichtung durchlässt. Während der Aufnahmephase ist ferner die Flüssigkristallschicht, die für die Darstellung der optischen Inhalte auf dem Bildschirm zuständig ist, vorzugsweise derart angesteuert, dass sie im Wesentlichen transparent ist. Dies entspricht demjenigen Zustand, in dem ein LCD-Bildschirm üblicher Weise die Farbe Weiß darstellt, das heißt das gesamte Licht der Hintergrundbeleuchtung in Richtung des Betrachters durchlässt.

Der Bildschirm kann eine oder mehrere Infrarotleuchten aufweisen, die direkt oder indirekt die Scheibe, durch die die Darstellungsfläche zum Betrachter hin gebildet wird, von innen beleuchten. Die Flüssigkristallschicht, die für die Darstellung der optischen Inhalte auf dem Bildschirm zuständig ist, ist hierbei zumindest semi-transparent für diese Infrarotstrahlung. Beispielsweise kann diese Infrarotstrahlung die Flüssigkristallschicht zu 30-40% passieren. Somit muss diese Flüssigkristallschicht während der Aufnahmephase nicht derart angesteuert werden, dass sie transparent ist. Damit können auch langsamer schaltende Flüssigkristallschichten verwendet werden. Beispielhaft sei hier eine Flüssigkristallschicht mit einer maximalen Schaltfrequenz von 60 Hertz genannt.

Während der Darstellungsphase dagegen wird die Flüssigkristallschicht entsprechend den darzustellenden optischen Inhalten angesteuert.

Die Darstellungsphase ist bevorzugt um ein Vielfaches länger als die Aufnahmephase, wobei die Umschaltung zwischen den beiden Phasen mit einer derart hohen Frequenz erfolgt, dass sie für das menschliche Auge nicht mehr wahrnehmbar ist. Während der Aufnahmephase gelangt kein Licht der Hintergrundbeleuchtung in das Auge des Betrachters, sodass zum Erreichen eines gleichbleibenden Helligkeitswertes während der Darstellungsphase die Helligkeit entsprechend erhöht werden kann, um die während der Aufnahmephase verlorene Helligkeit zu kompensieren.

Es ist bevorzugt, dass die umschaltbare Diffusorschicht eine Flüssigkristallschicht umfasst. Hierbei handelt es sich nicht um dieselbe Flüssigkristallschicht, die für die Darstellung der optischen Inhalte des Bildschirms verwendet wird. Der Unterschied zwischen den beiden Fiüssigkristallschichten ist, dass die Flüssigkristallschicht zur Darstellung der optischen Inhalte pixelweise ansteuerbar ist oder sogar bei einer RGB-Darstellung pro Bildpixel dreifach angesteuert werden kann. Im Gegensatz hierzu ist es ausreichend, dass die umschaltbare Diffusorschicht die als Flüssigkristallschicht ausgebildet sein kann, in ihrer Gesamtheit von einem transparenten in einen transluzenten Zustand umgeschaltet werden kann. Die letztgenannte Schicht muss somit nicht pixelweise angesteuert werden.

In einer bevorzugten Ausführungsform weist die Hintergrundbeleuchtung eine Vielzahl insbesondere weißer LED's auf. LED's weisen den Vorteil auf, dass sie besonders schnell geschaltet werden können, sodass beispielsweise eine schnelle Umschaltung zwischen der Darstellungs- und Aufnahmephase möglich ist.

Bei der Bildaufnahmevorrichtung im erfindungsgemäßen Bildschirm kann es sich beispielsweise um eine digitale Foto- oder Videokamera handeln, die einen digitalen Bildsensor und ein Objektiv aufweist. Das Objektiv weist vorzugsweise eine einstellbare Blende auf, sodass die Schärfentiefe der Aufnahme eingestellt werden kann. Ferner kann das Objektiv eine sogenannte wedge lens aufweisen.

In einer bevorzugten Ausführungsform weist der Bildschirm eine weitere Diffusorschicht auf, die aus der Sicht des Betrachters vor der Hintergrundbeleuchtung angeordnet ist. Diese weitere Diffusorschicht ist transluzent und muss nicht umschaltbar sein.

Es ist bevorzugt, dass die weitere Diffusorschicht aus der Sicht des Betrachters vor der Bildaufnahmevorrichtung angeordnet ist und eine Ausnehmung aufweist, durch die die Bildaufnahmevorrichtung ihre Bildaufnahme in Richtung der Scheibe tätigen kann.

Es ist weiterhin bevorzugt, dass die Bildaufnahmevorrichtung von der umschaltbaren Diffusorschicht einen derart großen Abstand aufweist, dass sie für einen Betrachter nicht erkennbar oder sichtbar ist, wenn sich die umschaltbare Diffusorschicht im transluzenten Zustand befindet. Beispielsweise kann der Abstand mindestens 3 cm, 5 cm oder bevorzugt 10 cm betragen.

Weiterhin können im erfindungsgemäßen Bildschirm mehrere Bildaufnahmevorrichtungen verwendet werden, die ebenfalls matrixförmig angeordnet sein können, um eine Bildaufnahme der gesamten Bildschirmoberfläche zu ermöglichen. Alternativ kann auch eine einzige Bildaufnahmevorrichtung verwendet werden, die beispielsweise mit einem Weitwinkelobjektiv ausgestattet ist. Unter einer matrixförmigen Anordnung der Bildaufnahmevorrichtungen wie auch beispielsweise der LED's, die die Hintergrundbeleuchtung bilden können, wird eine Anordnung in K.reuzmusterfiorm, das heißt in Reihen und Spalten, verstanden. Durch die Aufnahme aus mehreren Perspektiven kann eine dreidimensionale Rekonstruktion eines Gegenstandes erfasst werden.

Die Erfindung betrifft ferner ein Verfahren zum Darstellen von optischen Inhalten auf einem Bildschirm, wobei insbesondere der bisher beschriebene Bildschirm verwendet werden kann. Im erfindungsgemäßen Verfahren werden zunächst während in einer Darstellungsphase folgende Schritte ausgeführt:
Zunächst wird die Hintergrundbeleuchtung des Bildschirms angeschaltet. Diese bleibt bevorzugt während der gesamten Darstellungsphase angeschaltet. Gleichzeitig erfolgt ein pixelweises Ansteuern einer Flüssigkristallschicht mit einer elektrischen Spannung, sodass die Flüssigkristallschicht in Abhängigkeit von der anliegenden Spannung für jedes Pixel einen Teil oder das gesamte Licht der Hintergrundbeleuchtung in Richtung eines Betrachters durchlässt. Für die Darstellung eines Schwarzweißbildes ist es ausreichend, dass jeweils ein Punkt der Flüssigkristallschicht für jedes Bildpixel des Bildschirms angesteuert wird, da hier lediglich die Helligkeit des weißen Lichts der Hintergrundbeleuchtung, die in Richtung des Betrachters durchgelassen wird, gesteuert werden muss. Bei einer farbigen Darstellung, beispielsweise einer RGB-Darstellung, müssen dagegen mindestens drei Punkte der Flüssigkristallschicht pro Bildpixel angesteuert werden, wobei jeder Punkt jeweils für die Darstellung des Rot-, Grün- und Blauanteils in einem Bildpixel zuständig ist. Somit entsteht in Abhängigkeit der Lichtmenge, die in jedem Pixel von der Flüssigkristallschicht durchgelassen wird, ein aus einer Vielzahl von Pixeln bestehendes Bild, das für den Betrachter sichtbar ist.
Erfindungsgemäß werden während einer Aufnahmephase folgende Schritte ausgeführt:
   Es erfolgt ein Aufnehmen einer bildlichen Darstellung eines Gegenstandes durch eine im oder am Bildschirm angeordnete Bildaufnahmevorrichtung. Diese kann beispielsweise innerhalb des Bildschirmgehäuses angeordnet sein. Der Gegenstand ist für die Bildaufnahmevorrichtung durch eine Scheibe des Bildschirms, die eine zu einem Betrachter gerichtete Darstellungsfläche des Bildschirms bildet, sichtbar.

Der Gegenstand kann sich beispielsweise in unmittelbarem Kontakt zu der Scheibe oder aber in einem bestimmten Abstand zu dieser befinden. Unter einem Gegenstand wird erfindungsgemäß jeglicher Gegenstand verstanden, wobei es sich hier beispielsweise auch um ein Körperteil eines Betrachters des Bildschirms, beispielsweise um eine Hand oder einen Finger handeln kann.

Während der Aufnahmephase wird die Flüssigkristallschicht in einer bevorzugten Ausführungsform derart mit einer Spannung angesteuert, dass die Flüssigkristallschicht im Wesentlichen vollständig transparent ist. Dies entspricht dem Zustand der Flüssigkristallschicht während der Darstellungsphase, in dem der Bildschirm vollständig weiß ist, das heißt in dem die Flüssigkristallschicht das gesamte Licht der Hintergrundbeleuchtung in Richtung des Betrachters durchlässt. Während der Aufnahmephase ist die Hintergrundbeleuchtung ausgeschaltet.

Alternativ ist es möglich, ein Licht in Richtung der Scheibe, durch die die Darstellungsfläche zum Betrachter hin gebildet wird, auszustrahlen, wobei die Flüssigkristallschicht, die für die Bilddarstellung zuständig ist, für dieses Licht zumindest teilweise transparent ist. Hierbei kann es sich beispielsweise um Licht im Nahinfrarotbereich handeln, In dieser Ausführungsform muss die Flüssigkristallschicht während der Aufnahmephase nicht transparent sein, so dass es nicht notwendig ist, die Flüssigkristallschicht zwischen der Darstellungs- und Aufnahmephase umzuschalten. Somit können gemäß dieser Ausführungsform auch langsamer schaltende Flüssigkristallschichten verwendet werden, wobei bei der Verwendung von NIR-Licht selbstverständlich nur Monochrom-Aufnahmen möglich sind.

Erfindungsgemäß ist eine umschaltbare Diffusorschicht vorgesehen, die zwischen der Flüssigkristallschicht und der Bildaufnahmevorrichtung angeordnet ist und die während der Darstellungsphase derart mit einer elektrischen Spannung angesteuert wird, dass die umschaltbare Diffusorschicht transluzent ist. Während der Aufnahmephase dagegen wird diese umschaltbare Diffusorschicht derart mit einer elektrischen Spannung angesteuert, dass die umschaltbare Diffusorschicht transparent ist. Bei dem Ansteuern der umschaltbaren Diffusorschicht zum Herstellen eines transluzenten oder transparenten Zustandes kann es auch notwendig sein, die umschaltbare Diffusorschicht spannungsfrei zu schalten, das heißt mit keiner elektrischen Spannung zu beaufschlagen, um einen der beiden Zustände zu erreichen, während der andere Zustand beim Beaufschlagen der umschaltbaren Diffusorschicht mit einer Spannung erreicht wird. Die elektrische Spannung, mit der die umschaltbare Diffusorschicht angesteuert wird, kann somit auch 0 Volt betragen. Umschaltbare Diffusorschichten, die aus dem Stand der Technik bekannt sind, sind beim Anlegen einer elektrischen Spannung, beispielsweise einer hohen Wechselspannung transparent und gehen bei einem Abschalten dieser Spannung zumindest kurzzeitig in einen transluzenten Zustand über. Dieser transluzente Zustand kann beispielsweise 10 Millisekunden anhalten, wobei diese Zeit nicht wesentlich kleiner als die Dauer der Darstellungsphase sein darf.

Das erfindungsgemäße Verfahren kann sämtliche Merkmale aufweisen, die im Zusammenhang mit dem erfindungsgemäßen Bildschirm beschrieben werden und umgekehrt.

Durch die erfindungsgemäße Aufteilung in eine Darstellungs- und Aufnahmephase sowie durch die Verwendung der umschaltbaren Diffusorschicht wird es möglich, einen Bildschirm in fifachbauener LED-Technologie zu verwenden und gleichzeitig diesen Bildschirm mit einer Bildaufnahmevorrichtung auszustatten, die Gegenstände, die auf diesem Bildschirm platziert werden, aufnehmen kann. Hierzu wird erfindungsgemäß keine komplexe Anordnung von optischen Elementen innerhalb des Bildschirms notwendig. Vielmehr ist es ausreichend, die umschaltbare Diffusorschicht zwischen der Flüssigkristallschicht und der Bildaufnahmevorrichtung anzuordnen und diese entsprechend dem erfindungsgemäßen Verfahren anzusteuern,

Die bildliche Aufnahme des Gegenstandes, der für die Bildaufnahmevorrichtung durch die Scheibe sichtbar ist und der sich in Kontakt mit der Scheibe befindet, kann dazu verwendet werden, einen Eingabebefehl am Bildschirm zu erzeugen, sodass dieser als Touchdisplay verwendbar ist.

Um zu verhindern, dass Gegenstände von der Bildaufnahmevorrichtung erfasst werden, die sich in einem zu großen Abstand zu der Scheibe des Bildschirms befinden, ist es möglich, die Schärfentiefe der Bildaufnahmevorrichtung durch Verringern der Blendenzahl, mit der eine Bildaufnahme getätigt wird, zu reduzieren. Die Blendenzahl kann insbesondere soweit verringert werden, dass eine sehr geringe Schärfentiefe vorliegt, sodass lediglich Gegenstände scharf erfasst werden, die sich unmittelbar auf der Scheibe, das heißt in Kontakt zu dieser befinden.

Es ist bevorzugt, dass die Darstellungsphase mindestens gleichlang, bevorzugt zwei-, drei-, fünf-, oder zehnmal so lang ist wie die Aufnahmephase, sodass aufgrund der ausgeschalteten Hintergrundbeleuchtung während der Aufnahmephase nur ein unwesentlicher Helligkeitsverlust eintritt. Die Periodendauer einer Darstellungsphase und einer Aufnahmephase zusammen, das heißt die Summe der Dauer einer Darstellungsphase und einer Aufnahmephase kann zwischen 5 und 20 Millisekunden liegen. Beispielsweise kann eine Darstellungsphase 12 Millisekunden und eine Aufnahmephase 4 Millisekunden betragen. Die Länge der Aufnahmephase ist in jedem Fall derart zu wählen, dass die Abschaltung der Hintergrundbeleuchtung während der Aufnahmephase für das Auge eines Betrachters nicht wahrnehmbar ist.

Der Helligkeitsverlust durch die Abschaltung der Hintergrundbeleuchtung während der Aufnahmephase kann dadurch kompensiert werden, dass während der Darstellungsphase die Helligkeit der Bilddarstellung erhöht wird. Macht beispielsweise die Länge einer Aufnahmephase 1/5 der Länge der Darstellungsphase aus, so kann während der Darstellungsphase die Helligkeit um 1/5 erhöht werden, um diesen Helligkeitsverlust zu kompensieren.

Sofern die Flüssigkristallschicht während der Aufnahmephase nicht derart angesteuert wird, dass sie transparent wird, sondern ein Licht verwendet wird, für das die Flüssigkristallschicht zumindest teilweise durchlässig ist (beispielsweise Infrarotlicht), können während der Aufnahmephase folgende Verfahrensschritte durchgeführt werden:
Während der Aufnahmephase wird zuerst das Licht, beispielsweise das Infrarotlicht, angeschaltet. Hierbei wird ein erstes Bild aufgenommen, das reflektiertes Infrarotlicht erfassen kann, das von einem Gegenstand, der durch die Scheibe sichtbar ist, in Richtung der Bildaufnahmevorrichtung reflektiert wurde. Dieses erste Bild erfasst selbstverständlich auch das Umgebungslicht, das durch die Scheibe in Richtung der Bildaufnahmevorrichtung ausgestrahlt wird. Während der Aufnahmephase wird das Infrarotlicht dann ausgeschaltet, wobei beim ausgeschalteteb Infrarotlicht ein zweites Bild aufgenommen wird. Dies kann mit einer geringeren Auflösung, beispielsweise mit einem Viertel der Auflösung des ersten Bildes geschehen. Das zweite Bild wird nun vom ersten Bild subtrahiert, so dass ein Differenzbild entsteht, in dem das Umgebungslicht, das sich im ersten Bild befand, eliminiert wurde. Vorteil dieses Verfahrens ist, dass die zu erkennenden Gegenstände deutlicher gegenüber dem Umgebungslicht erkannt werden können. Grundlage hierfür ist, dass sich das Bild des Hintergrunds oder der Umgebung des aufzunehmenden Gegenstandes während des An- und Ausschaltens des Infrarotlichts nur sehr wenig ändert. Dies liegt darin begründet, dass ein Gegenstand, der sich in einem größeren Abstand vom Bildschirm befindet, viel weniger Infrarotlicht reflektiert als ein Gegenstand in der Nähe des Bildschirms. Ein solcher Gegenstand in einem großen Abstand zum Bildschirm ist somit bereits beim ersten Bild relativ dunkel. Nennenswerte Unterschiede zwischen dem ersten und dem zweiten Bild bestehen nur bei Gegenständen, die sich relativ nah oder unmittelbar in Kontakt zur Scheibe befinden. Mit anderen Worten ist der Anteil des reflektierten Infrarotlichts während der ersten Bildaufnahme bei größerem Abstand des Objekts geringer.

Im Folgenden werden bevorzugte Ausführungsformen der Erfindung anhand von Figuren erläutert.

Es zeigen:
- Fig. 1: Den schematischen Aufbau einer Ausführungsform des erfindungsgemäßen Bildschirms.
- Fig. 2: Eine Draufsicht auf den unteren Teil des Bildschirms, wobei die Bildaufnahmevorrichtungen und die Hintergrundbeleuchtung sichtbar sind.

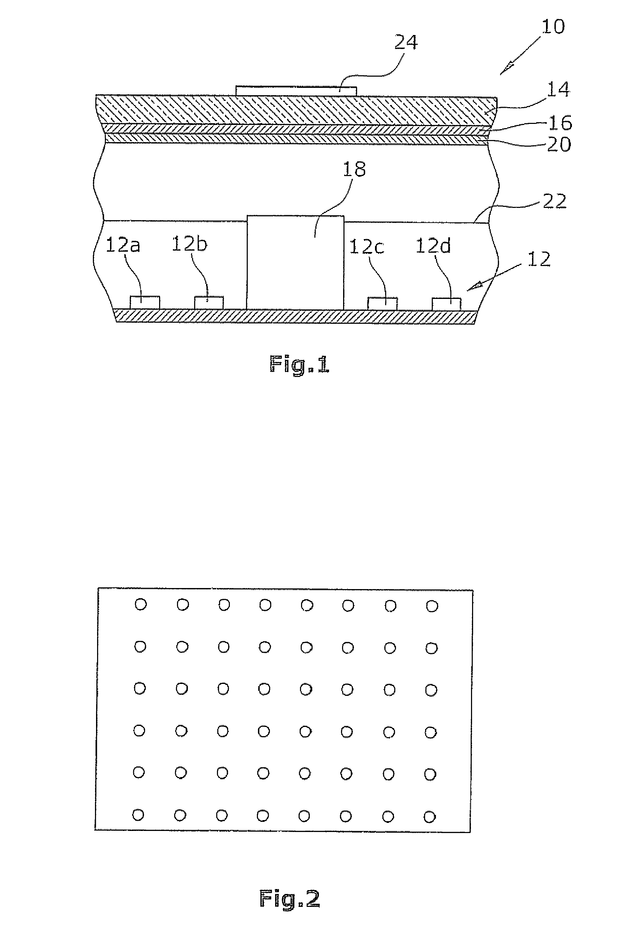

Gemäß Fig. 1 weist der Bildschirm (10) eine Hintergrundbeleuchtung (12) auf, die eine Vielzahl von weißen LED's oder RGB-LED's (12a, 12b, 12c, 12d...) umfasst. An der zum Betrachter gerichteten Seite des Bildschirms (10) weist dieser eine Scheibe (14) auf, durch die eine Darstellungsfläche zu dem Betrachter hin gebildet wird. Unmittelbar hinter dieser Scheibe ist eine Flüssigkristallschicht (16) angebracht, die pixelweise oder mit einer höheren Genauigkeit ansteuerbar ist und die in Abhängigkeit einer anliegenden Spannung für jedes Pixel einen Teil oder das gesamte Licht der Hintergrundbeleuchtung (12) in Richtung des Betrachters durchlässt.

Der Bildschirm (10) weist ferner gemäß Fig. 1 eine Bildaufnahmevorrichtung (18) auf, die zur Aufnahme einer bildlichen Darstellung eines Gegenstandes (24), der durch die Scheibe (14) sichtbar ist, bestimmt ist. Die Bildaufnahmevorrichtung (18) ist aus der Sicht des Betrachters hinter der Flüssigkristallschicht (16) angeordnet.

Gemäß Fig. 2 weist der Bildschirm mehrere Bildaufnahmevorrichtungen (18) auf, die matrixförmig angeordnet sind. Die weißen LED's (12a, 12b, 12c, 12d...) der Hintergrundbeleuchtung sind ebenfalls matrixförmig angeordnet. Es ist möglich, um eine oder mehrere Bildaufnahmevorrichtungen herum eine größere Dichte an LED's vorzusehen, um die Verschattung durch die Bildaufnahmevorrichtung zu kompensieren.

Gemäß Fig. 1 weist der Bildschirm (10) ferner eine umschaltbare Diffusorschicht (20) auf, die zwischen der Flüssigkristallschicht (16) und der Bildaufnahmevorrichtung (18) angeordnet ist. Diese umschaltbare Diffusorschicht (20) ist in Abhängigkeit einer anliegenden Spannung zwischen einem transparenten und einem transluzenten Zustand umschaltbar.

Die genannte Schicht befindet sich aus der Blickrichtung des Betrachters unmittelbar hinter der Flüssigkristallschicht (16) und weist einen Abstand zu der Bildaufnahmevorrichtung (18) auf.

Bei der Durchführung des erfindungsgemäßen Verfahrens erfolgt während der Darstellungsphase ein Einschalten der Hintergrundbeleuchtung (12) des Bildschirms (10) und ein gleichzeitiges pixelweises Ansteuern der Fliässigkristallschicht (16) mit einer elektrischen Spannung, sodass die Flüssigkristallschicht (16) in Abhängigkeit von der anliegenden Spannung für jedes Pixel einen Teil oder das gesamte Licht der Hintergrundbeleuchtung (12) in Richtung des Betrachters durchlässt. Während der Darstellungsphase wird die umschaltbaren Diffusorschicht (20) spannungsfrei geschaltet, so dass die umschaltbaren Diffusorschicht (20) transluzent ist. Während der Aufnahmephase dagegen wird die umschaltbare Diffusorschicht (20) derart angesteuert, dass sie transparent ist. Während dieser Phase können somit Lichtstrahlen, die vom Gegenstand (24) ausgehen, die umschaltbare Diffusorschicht (20) passieren und im Wesentlichen verzerrungsfrei zu der Bildaufnahmevorrichtung (18) gelangen.

## Patentansprüche

1. Bildschirm, mit
- einer Hintergrundbeleuchtung (12),
- einer Scheibe (14), durch die eine Darstellungsfläche zu einem Betrachter hin gebildet wird,
- einer Flüssigkristallschicht (16), die pixelweise ansteuerbar ist und die in Abhängigkeit einer anliegenden Spannung für jedes Pixel einen Teil oder das gesamte Licht der Hintergrundbeleuchtung in Richtung eines Betrachters durchlässt, sodass in Abhängigkeit der Lichtmenge, die in jedem Pixel von der Flüssigkristallschicht (16) durchgelassen wird, ein aus einer Vielzahl von Pixeln bestehendes Bild entsteht, dass für den Betrachter sichtbar ist,
**gekennzeichnet durch,**
- eine Bildaufnahmevorrichtung (18) zur Aufnahme einer bildlichen Darstellung eines Gegenstandes (24), der **durch** die Scheibe (14) der Darstellungsfläche sichtbar ist, wobei die Bildaufnahmevorrichtvng (18) aus der Sicht des Betrachters hinter der Flüssigkristallschicht (16) angeordnet ist,
- eine umschaltbare Diffusorschicht (20), die zwischen der Flüssigkristallschicht (16) und der Bildaufnahmevorrichtung (18) angeordnet ist, wobei die umschaltbare Diffusorschicht (20) in Abhängigkeit einer anliegenden Spannung zwischen einem transparenten und einem transluzenten Zustand umschaltbar ist.

2. Bildschirm nach Anspruch 1, **dadurch gekennzeichnet, dass** die umschaltbare Diffusorschicht (20) eine Flüssigkristallschicht (16) umfasst.

3. Bildschirm nach Anspruch 1 oder 2, **dadurch gekennzeichnet, dass** die Hintergrundbeleuchtung (12) eine Vielzahl insbesondere weißer LED's (12a, 12b, 12c, 12d ....) aufweist, die bevorzugt matrixförmig angeordnet sind.

4. Bildschirm nach einem der Ansprüche 1 bis 3, **gekennzeichnet durch** eine weitere Diffusorschicht (22), die aus der Sicht des Betrachters vor der Hintergrundbeleuchtung (12) angeordnet ist, wobei die weitere Diffusorschicht (22) transluzent ist, und die weitere Diffusorschicht (22) aus der Sicht des Betrachters insbesondere vor der Bildaufnahmevorrichtung (18) angeordnet ist und eine Ausnehmung aufweist, **durch** die die Bildaufnahmevorrichtung (18) ihre Bildaufnahme in Richtung der Scheibe (14) tätigen kann.

5. Bildschirm nach einem der Ansprüche 1 bis 4, **dadurch gekennzeichnet, dass** die Bildaufnahmevorrichtung (18) von der umschaltbaren Diffusorschicht (20) einen derart großen Abstand aufweist, dass sie für einen Betrachter nicht erkennbar oder sichtbar ist, wenn sich die umschaltbare Diffusorschicht (20) im transluzenten Zustand befindet.

6. Verfahren zum Darstellen von optischen Inhalten auf einem Bildschirm (10), wobei das Verfahren die folgenden Schritte umfasst:
Ausführen folgender Schritte während einer Darstellungsphase:
- Anschalten einer Hintergrundbeleuchtung (12) des Bildschirms (10),
- pixelweises Ansteuern einer Flüssigkristallschicht (16) mit einer elektrischen Spannung, sodass die Flüssigkristallschicht (16) in Abhängigkeit von der anliegenden Spannung für jedes Pixel einen Teil oder das gesamte Licht der Hintergrundbeleuchtung (12) in Richtung eines Betrachters durchlässt, sodass in Abhängigkeit der Lichtmenge, die in jedem Pixel von der Flüssigkristallschicht (16) durchgelassen wird, ein aus einer Vielzahl von Pixeln bestehendes Bild entsteht, das für den Betrachter sichtbar ist,
**dadurch gekennzeichnet, dass**
während einer Aufnahmephase folgende Schritte ausgeführt werden:
- Aufnehmen einer bildlichen Darstellung eines Gegenstandes (22) durch eine im oder am Bildschirm (10) angeordnete Bildaufnahmevorrichtung (18), wobei der Gegenstand (22) für die Bildaufnahmevorrichtung (18) durch eine Scheibe (14) des Bildschirms (10), die eine zu einem Betrachter gerichtete Darstellungsfläche bildet, sichtbar ist,
wobei die Hintergrundbeleuchtung (12) während der Aufnahmephase ausgeschaltet ist,
wobei eine umschaltbare Diffusorschicht (20), die zwischen der Flüssigkristallschicht (16) und der Bildaufnahmevorrichtung (18) angeordnet ist, während der Darstellungsphase derart mit einer elektrischen Spannung angesteuert wird, dass die umschaltbare Diffusorschicht (20) transluzent ist und
die umschaltbare Diffusorschicht (20) während der Aufnahmephase derart mit einer elektrischen Spannung angesteuert wird, dass die umschaltbare Diffusorschicht (20) transparent ist.

7. Verfahren nach Anspruch 6, **dadurch gekennzeichnet, dass** die bildliche Aufnahme eines Gegenstandes, der für die Bildaufnahmevorrichtung (18) durch die Scheibe (14) sichtbar ist und der sich insbesondere in Kontakt mit der Scheibe (14) befindet, dazu verwendet wird, einen Eingabebefehl am Bildschirm (10) zu erzeugen, sodass dieser als Touchdisplay verwendbar ist.

8. Verfahren nach Anspruch 6 oder 7, **gekennzeichnet durch** den Schritt: Reduzieren der Schärfentiefe der Bildaufnahmevorrichtung (18) **durch** Verringern der Blendenzahl, mit der eine Bildaufnahme getätigt wird.

9. Verfahren nach einem der Ansprüche 6 bis 8, **dadurch gekennzeichnet, dass** die Darstellungsphase mindestens gleichlang, bevorzugt zwei-, drei-, fünf- oder zehnmal so lang ist wie die Aufnahmephase, wobei die Periodendauer einer Darstellungsphase und einer Aufnahmephase zusammen zwischen 5 und 20 Millisekunden liegt und insbesondere 16,6 Millisekunden beträgt.

10. Verfahren nach einem der Ansprüche 6 bis 9, **dadurch gekennzeichnet, dass** während der Darstellungsphase die Helligkeit der Bilddarstellung erhöht wird, um den Helligkeitsverlust durch die Abschaltung der Hintergrundbeleuchtung (12) während der Aufnahmephase zu kompensieren.

11. Verfahren nach einem der Ansprüche 6 bis 10, **gekennzeichnet durch** den folgenden zusätzlichen Schritt:
- Ansteuern der Flüssigkristallschicht mit einer elektrischen Spannung während der Aufnahmephase derart, dass die Flüssigkristallschicht (16) im Wesentlichen vollständig transparent ist.

12. Verfahren nach einem der Ansprüche 6 bis 10, **dadurch gekennzeichnet dass**, ein Licht, für das die Flüssigkristallschicht (16) zumindest teilweise durchlässig ist, während der Aufnahmephase, direkt oder indirekt in Richtung der Innenseite der Scheibe (14) ausgestrahlt wird, wobei dieses Licht von Gegenständen (24), die durch die Scheibe (14) der Darstellungsfläche sichtbar sind, in Richtung der Bildaufnahmevorrichtung (18) reflektiert wird und dieses Licht während der Darstellungsphase ausgeschaltet wird.

13. Verfahren nach Anspruch 12, **dadurch gekennzeichnet, dass** während der Aufnahmephase das Licht, für das die Flüssigkristallschicht (16) durchlässig ist, angeschaltet wird und durch die Bildaufnahmevorrichtung ein erstes Bild aufgenommen wird, wobei in diesem ersten Bild das Licht erfasst wird, das vom Bildschirm ausgeht und von einem Gegenstand (24) in Richtung der Bildaufnahmevorrichtung (18) reflektiert wird, und ferner im ersten Bild Umgebungslicht erfasst wird,
und das Licht während der Aufnahmephase ausgeschaltet wird, woraufhin von der Bildaufnahmevorrichtung (18) ein zweites Bild aufgenommen wird, in dem ausschließlich Umgebungslicht erfasst wird, das die Bildaufnahmevorrichtung (18) erreicht,
wobei das zweite Bild von dem ersten Bild subtrahiert wird, so dass ein Differenzbild entsteht, in dem das sich im ersten Bild befindliche Umgebungslicht eliminiert wurde.
